# EUROPEAN PATENT APPLICATION

(11) **EP 2 546 196 A1**
(43) Date of publication of application: **16.01.2013**
(21) Application number: 11753424.8
(22) Date of filing: 10.03.2011
(51) Int. Cl.: C01B 33/025, C01B 33/021, F27D 1/00, F27D 3/14

(54) **METHOD AND JIG FOR PRODUCING SILICON**

(30) Priority: 11.03.2010 JP 2010054727; 11.03.2010 JP 2010054697
(71) Applicant: Mitsubishi Chemical Corporation, Chiyoda-ku Tokyo 100-8251 (JP)
(72) Inventor: KATAYAMA Toshiaki, Yokohama-shi, Kanagawa 227-8502 (JP); YAMAHARA Keiji, Yokohama-shi, Kanagawa 227-8502 (JP)
(74) Representative: Vossius & Partner
(86) International application number: PCT/JP2011/055591
(87) International publication number: WO 2011/111766

(57) **Abstract**

An object is to provide a method for producing silicon, using an arc furnace, which can reduce a concentration of phosphorus in silicon produced.

The present invention provides a method for producing silicon by at least heating any one of raw materials for silicon production selected from a silica raw material and a carbon material; a silica raw material and silicon carbide; and silicon raw material, in a heating furnace,
wherein the method comprises operating at least one of the raw materials for silicon production and a heated product in the heating furnace using a jig, and
the jig comprises a non-metallic material portion having a bending strength of 100 MPa or more and a melting point higher than a melting point of silicon, and at least a portion thereof coming into contact with the raw materials for silicon production or the heated product, having a temperature of 1,000°C or higher, is constituted of the non-metallic material portion.

## Description

### Technical Field

The present invention relates to a method for producing silicon, and a jig, and more specifically to a jig for operating raw materials for silicon production or a heated product in a furnace when producing silicon by heating, and a method for producing silicon using the jig.

### Background Art

Solar cells have the advantages that carbon dioxide emissions per electric generating capacity are small and a fuel for electric generation is not required, and its demand is recently increasing. Of solar cells that are currently put to practical use, a single bond solar cell having a pair of P-N junctions, using monocrystal silicon or polycrystal silicon becomes mainstream, and demand of silicon is increased with increasing demand of solar cells. Silicon used in solar cells is required to have high purity in order to improve cell efficiency.

Various methods for producing silicon are proposed, and one of those methods is a method of obtaining roughly purified silicon by carbon reduction using silicon dioxide and a carbon material. For example, in Patent Documents 1 to 4, silicon is produced by thermally reducing silicon dioxide in an electric furnace using a carbon material.

In such a production method, charcoal, metallurgical coke, oil coke, bituminous coal and the like that are generally used as a carbon material are appropriately combined and used. However, those carbon materials contain volatile components and ash.

In the method for producing silicon using low purity raw materials as described in Patent Documents 1 to 4, purity of silicon obtained is not said to be sufficiently high, and a method for producing a silicon raw material that can easily be applied to solar cells and the like has been demanded.

In view of the above, the present inventors considered that high purity silicon can be produced by using high purity raw materials for silicon production in place of low purity raw materials for silicon production that have conventionally been used as shown in Patent Documents 1 to 4, in the production of silicon. That is, they have considered that high purity silicon can be produced by using high purity silicon dioxide high purity carbon, and have conducted experiments to actually produce silicon in an arc furnace in such raw materials for silicon production.

In producing silicon in the arc furnace, silica as a raw material is present in a semi-molten state. On the other hand, silicon monoxide formed by a reaction becomes deposited on a low temperature part, thereby strong shell is formed near the surface of raw materials. As a result, the situation occurs that fresh raw materials introduced from an upper part of the arc furnace cannot drop to a reaction zone in the furnace. In this case, the shell formed near the surface of the raw materials must be crushed, and the shell was mechanically crushed by using a poking rod (Patent Documents 5 and 6).

Furthermore, a silicon melt formed by a reduction reaction in the arc furnace is accumulated on a furnace bottom. Removing the accumulated silicon melt from a side wall at a lower part of the furnace in a molten state is called "tapping". When conducting tapping, a tapping bar is pushed into the furnace in horizontal direction from a side surface of the arc furnace, breaks a tap (generally a clay-like material comprising pitch as a main component) used to stop a melt, and breaks through a product formed by solidifying raw materials for silicon production and a heated product, that clogs a sprue runner, thereby forming the sprue runner. Silicon melt accumulated near the center of a furnace bottom is guided outside the arc furnace through the sprue runner, and received by a container arranged outside the arc furnace (Patent Document 6).

In the conventional ordinary arc furnaces, carbon or an oxide brick (Patent Document 7) or an inorganic bonding material such as a phosphate (Patent Documents 8 and 9) has been used.

### Prior Art Documents

### Patent Document

Patent Document 1: JP-A 57-111223
Patent Document 2: JP-A 60-200818
Patent Document 3: JP-A 61-117110
Patent Document 4: JP-A 62-260711
Patent Document 5: JP-B 57-57943
Patent Document 6: JP-A 63-147813
Patent Document 7: JP-A 2005-162607
Patent Document 8: JP-T 8-507282 (the term "JP-T" as used herein means a published Japanese translation of a PCT patent application)
Patent Document 9: JP-A 5-4873

### Summary of the Invention

### Problems that the Invention is to Solve

Patent Documents 5 and 6 above do not describe a material constituting a poking rod or a tapping bar, but conventionally an iron-made poking rod or tapping bar has generally been used. However, in the case that an iron-made poking rod is used, a shell formation place near the surface of the raw materials for silicon production has high temperature of from 1,000°C to 1,600°C. Therefore, there were problems that a tip of the poking rod is exhausted by abrasion and erosion, and iron or the like as a material component of the poking rod contaminates the raw materials for silicon production, thereby mixing in silicon as a product.

Furthermore, in the case of using an iron-made tapping bar, the problem occurred that the tapping bar erodes by that the tip of the tapping bar is exposed to high temperature in the furnace or comes into contact with a silicon melt, and iron or the like as the component of the tapping bar mixes in silicon.

Thus, if a jig such as a poking rod or tapping bar contaminated silicon to be produced, an attempt of producing high purity silicon by using high purity raw materials for silicon production becomes meaningless.

In view of the above, the present invention has an object to provide a method for producing silicon using a jig that prevents contamination to raw materials for silicon production or heated product, can improves purity of silicon to be produced, and has sufficient strength for the operation in an arc furnace, such as poking and tapping task.

Furthermore, as a result of investigations by the present inventors, it was found that even through silicon was produced using high purity raw materials for silicon production, particularly, raw materials for silicon production having low phosphorus concentration, in the case that the above-described ordinary arc furnace was used, the problem occurs that a phosphorus concentration in the silicon produced is higher than the concentration calculated from the charged amounts of raw materials for silicon production.

Accordingly, the present invention has an object to provide a method for producing silicon using an arc furnace, which can reduce a phosphorus concentration in silicon produced.

### Means for Solving the Problems

The present inventors have made earnest investigations on the cause of the above problems, and have reached to find the following points.
(1) In a jig such as a poking rod or a tapping bar used in producing silicon by heating, at least a portion thereof coming into contact with at least one of raw materials for silicon production, such as silica, and a heated product, having high temperature must be formed by a non-metallic material.
(2) At least a portion coming into contact with at least one of raw materials for silicon production, such as silica, and a heated product, in the jig is preferably formed by a non-metallic material. When a portion coming into contact with not only raw materials for silicon production and a heated product, having high temperature, but for example, raw materials for silicon production and a heated product, having room temperature and the vicinity, the problem that a metal-made jig wears away by rubbing between raw materials for silicon production and the jig, and wear debris mixes in the silicon produced can be prevented.
(3) The non-metallic part has given strength, and its melting point is higher than the melting point of silicon.
(4) A carbon fiber-reinforced carbon material (hereinafter sometimes referred to as "C/C"), a silicon-impregnated carbon fiber-reinforced carbon material (hereinafter sometimes referred to as "C/C/Si") or a composite material of those materials can be used as the non-metallic material having such performances.
(5) In the case that silicon is produced by carbon reduction using high purity materials as silica and/or a carbon material that are raw materials for silicon production, contamination of silicon can be prevented by suing the jig, and high purity silicon can be obtained.

(6) As phosphorus mixing source in the production of silicon, phosphorus is mixed in silicon produced, from an inner wall of a furnace body of an arc furnace.
(7) Phosphorus contained in an inner wall of a member covering an upper part of the furnace body in the inner walls of the furnace body participates to the mixing of phosphorus. It is considered that the phenomenon that phosphorus mixes in silicon produced, from the inner wall of the member covering an upper part of the furnace body is conducted through a gas phase by that a phosphorus component is released from the inner wall.
(8) Phosphorus possibly mixes from an inner wall portion coming into contact with a melt of raw materials for silicon production or a silicon melt produced, among the inner walls of the furnace body.
(9) Release of the phosphorus component from the inner wall of the furnace body becomes remarkable when a temperature of the inner wall of the furnace body has reached a given temperature.
(10) Mixing phosphorus in silicon produced, from the inner wall of the furnace body can be suppressed by constituting at least a given portion of the inner wall of the furnace body with a refractory having sufficiently low phosphorus content.

The present inventors have completed the following inventions based on the above recognitions. That is, the gist of the present invention is as follows.
1. A method for producing silicon by at least heating any one of raw materials for silicon production selected from a silica raw material and a carbon material; a silica raw material and silicon carbide; and silicon raw material, in a heating furnace,
   wherein the method comprises operating at least one of the raw materials for silicon production and a heated product in the heating furnace using a jig, and
   the jig comprises a non-metallic material portion having a bending strength of 100 MPa or more and a melting point higher than a melting point of silicon, and at least a portion thereof coming into contact with the raw materials for silicon production or the heated product, having a temperature of 1,000°C or higher, is constituted of the non-metallic material portion.
2. The method for producing silicon as described in the item 1, wherein a portion coming into contact with the raw materials for silicon production or the heated product is constituted of the non-metallic material portion.
3. The method for producing silicon as described in the item 1 or 2, wherein the non-metallic material is a carbon fiber-reinforced carbon material, a silicon-impregnated carbon fiber-reinforced carbon material or a composite material of those materials.
4. The method for producing silicon as described in any one of the items 1 to 3, wherein the jig has a metal-made core rod, and a surface of the metal-made core rod is covered with the non-metallic material.
5. The method for producing silicon as described in any one of the items 1 to 4, wherein a content of iron in the raw materials for silicon production is 0.1% mass or less.
6. The method for producing silicon as described in any one of the items 1 to 5, wherein a content of iron in the silica raw material is 0.1 % by mass or less.
7. The method for producing silicon as described in any one of the items 1 to 6, wherein the jig is a jig used to crush a solid containing at least one of the raw materials for silicon production and the heated product.
8. The method for producing silicon as described in any one of the items 1 to 6, wherein the jig is a jig used to open a flow passage allowing passage of a silicon melt formed by heating when extracting the silicon melt from the heating furnace.
9. The method for producing silicon as described in any one of the items 1 to 6, wherein the jig is a jig used to crush a solid containing at least one of the raw materials for silicon production and the heated product, and a jig used to open a flow passage allowing passage of a silicon melt formed by heating when extracting the silicon melt from the heating furnace.
10. A jig comprising a non-metallic material portion having a bending strength of 100 MPa or more and a melting point higher than a melting point of silicon.
11. The jig as described in the item 10, which is a jig to operate at least one of raw materials for silicon production and a heated product when producing silicon by at least heating any one selected from a silica raw material and a carbon material; a silica raw material and silicon carbide; and a silicon raw material, as the raw materials for silicon production, wherein at least a portion thereof coming into contact with the raw materials for silicon production or the heated product, having a temperature of 1,000°C or higher is constituted of the non-metallic material portion.
12. The jig as described in the item 10 or 11, wherein a portion coming into contact with the raw materials for silicon production or the heated product is constituted of the non-metallic material portion.
13. The jig as described in any one of the items 10 to 12, wherein the non-metallic material is a carbon fiber-reinforced carbon material, a silicon-impregnated carbon fiber-reinforced carbon material or a composite material of those materials.
14. The jig as described in any one of the items 10 to 13, which has a metal-made core rod, and a surface of the metal-made core rod is covered with the non-metallic material.
15. The jig as described in any one of the items 10 to 14, wherein a content of iron in the raw materials for silicon production is 0.1% mass or less.
16. The jig as described in any one of the items 10 to 15, wherein a content of iron in the silica raw material is 0.1 % by mass or less.
17. The jig as described in any one of the items 10 to 16, which is a jig used to crush a solid containing at least one of the raw materials for silicon production and the heated product.
18. The jig as described in any one of the items 10 to 17, which is a jig used to open a flow passage allowing passage of a silicon melt formed in the heating furnace when extracting the silicon melt from the heating furnace.
19. The jig as described in any one of the items 10 to 18, which is a jig used to crush a solid containing at least one of the raw materials for silicon production and the heated product, and a jig used to open a flow passage allowing passage of a silicon melt formed by heating when extracting the silicon melt from the heating furnace.
20. The method for producing silicon as described in any one of the items 1 to 9,
   wherein the heating furnace is an arc furnace comprising a furnace body for storing the raw materials for silicon production, and
   among inner walls of the furnace body, at least a part of an inner wall of a member covering an upper part of the furnace body is constituted of a refractory having a phosphorus content of 0.01% by mass (100 wt ppm) or less.
21. The method for producing silicon as described in the item 20,
   wherein among inner walls of the furnace body, an inner wall portion capable of coming into contact with molten raw materials for silicon production or a silicon melt produced is constituted of the refractory.
22. The method for producing silicon as described in the item 20 or 21,
   wherein among inner walls of the furnace body, an inner wall portion at which temperature is 1100°C or higher by heating is constituted of the refractory.
23. The method for producing silicon as described in any one of the items 20 to 22, wherein the entire inner walls of the furnace body are constituted of the refractory.
24. The method for producing silicon as described in any one of the items 20 to 23, wherein thermal conductivity of the refractory is 0.5 W/mK or more.
25. The method for producing silicon as described in any one of the items 20 to 24, wherein the refractory contains alumina in an amount of 50% by mass or more.
26. The method for producing silicon as described in any one of the items 20 to 25, wherein boron and phosphorus contents in the raw materials for silicon production each are 0.001 % by mass or less.

### Advantage of the Invention

According to the method for producing silicon of the present invention, a jig equipped with non-metallic portions 12a and 12b having given strength and melting point are used as jigs 100A and 100B for operating in a heating furnace. This can suppress contamination of raw materials for silicon production or a heated product and can suppress contamination of silicon to be produced even though the raw materials 550 for silicon production or the heated product are operated in the furnace.

Furthermore, according to the method for producing silicon of the present invention, at least a part of given places of inner walls of a furnace body of an arc furnace used as a heating furnace heating raw materials for silicon production is constituted of a refractory having sufficiently low phosphorus content. This can prevent mixing of phosphorus in silicon produced and can produce silicon having reduced phosphorus content.

### Brief Description of the Drawings

Fig. 1 is a view explaining a use embodiment of a jig in a heating furnace used in the method for producing silicon of the present invention.
Fig. 2(A) is a view showing one embodiment of a poking rod, and Fig. 2(B) is a view showing one embodiment of a tapping bar.
Fig. 3 is a conceptual view showing a cross-sectional structure of an arc furnace 100 used in the method for producing silicon of the present invention.
Fig. 4 is a view for explaining a carbon reduction reaction of silicon dioxide in an arc furnace.
Fig. 5 is a view for explaining a production apparatus of silicon.
Fig. 6 is a flow chart showing one embodiment of a method for producing silicon.

### Mode for Carrying Out the Invention

Reference numerals and signs are attached to the accompanying drawings in order to facilitate understanding of the present invention, but this does not limit the present invention to the embodiments shown in the drawings. Furthermore, the method for producing silicon of the present invention is described in detail below by reference to the drawings, but the description is one example of the embodiments of the present invention, and the present invention is not limited to the following contents unless exceeding the gist of the present invention.

The method for producing silicon of the present invention is a method for producing silicon by heating at least any one of raw materials 550 for silicon production selected from a silica raw material and a carbon material; a silica material and silicon carbide; and silicon raw materials in a heating furnace, and includes a step of operating at least one of the raw materials 550 for silicon production and the heated product in the heating furnace using jigs 100A and 100B.

The production of silicon in the present invention includes to purify silicon from silicon raw materials.

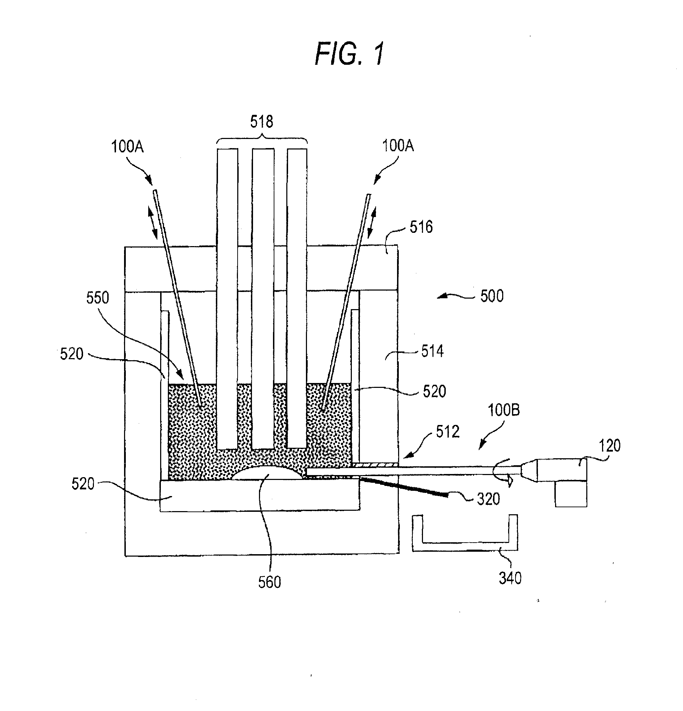

Fig. 1 shows an explanatory view of one embodiment of tapping task and poking work. An arc furnace 500 is not particularly limited so long as it is a furnace for producing silicon by heating. Examples of a heating method in the furnace include arc heating, induction heating, resistance heating, plasma heating and electron beam heating.

Above all, it is preferred to employ the method of the present invention using an arc furnace in which a temperature of an arc part reaches from 2,000 to 3,000°C from the standpoint of exerting heat resistance performance of the jigs 100A and 100B used in the present invention.

The arc furnace 500 is shown as one embodiment of the furnace in Fig. 1. The arc furnace 500 comprises a furnace body 514 for storing raw materials 550 for producing silicon (raw materials for silicon production) and a silicon melt 560 produced, an electrode 518 for heating the raw materials 550 for silicon production, and a furnace lid 516.

Graphite lining 520 is formed on side surfaces and a furnace bottom of the inside of the furnace body 514. A tap hole 512 is formed on a side wall of a lower part of the furnace. In the arc furnace 500, arc is emitted toward the furnace bottom from the tip of the electrode 518, and a place emitting the arc has the highest temperature, and the temperature is from about 2,000 to 3,000°C. Therefore, the raw materials for silicon production near the tip of the electrode 518 have a molten state. Furthermore, the silicon melt 560 produced is collected at the furnace bottom.

### [Jig]

The jig of the present invention is a jig containing a non-metallic material portion having bending strength of 100 MPa or more and a melting point higher than the melting point of silicon. In the method for producing silicon of the present invention, at least one of raw materials for silicon production and a heated product is operated in the heating furnace using the jig. The bending strength is that a carbon fiber-reinforced carbon material is measured according to JIS K7074, graphite is measured according to JIS R7222, a metal is measured according to JIS Z2204, and other materials are measured according to JIS R1601.

] When bending strength of the non-metallic material portion is at least 100 MPa or more, the problem does not occur that strength of the jigs 100A and 100B is deficient, and the jigs break or bend in conducting operations such as poking work and tapping task. The strength is preferably 120 MPa or more, and more preferably 140 MPa or more.

The jigs 100A and 100B may be entirely constituted of a non-metallic material. However, the non-metallic material is expensive. Therefore, at least the portion coming into contact with the raw materials for silicon production or the heated product, having a temperature of 1,000°C or higher is required to be constituted of non-metallic material portions 12a and 12b.

In the jigs 100A and 100B, preferably the portion coming into contact with the raw materials for silicon production or the heated product, having a temperature of 800°C or higher, and more preferably the portion coming into contact with the raw materials for silicon production or the heated product, having a temperature of 600°C or higher, are preferably constituted of the non-metallic material portions 12a and 12b.

In the case of a metal-made jig, oxidation corrosion other than melting becomes problem. Temperature at which oxidation of a metal easily occurs is 600°C or higher. Therefore, the portion coming into contact with raw materials for silicon production and the like, having the temperature or higher is more preferably constituted of a non-metallic material.

Irrespective of the temperature of the raw materials for silicon production or the heated product, at least the portions coming into contact with the raw materials for silicon production or the heated product, in the jigs 100A and 100B are preferably constituted of the non-metallic material portions 12a and 12b.

When a portion coming into contact with not only the raw materials for silicon production or the heated product, having high temperature, but, for example, the raw materials for silicon production and the heated product, having room temperature and the vicinity is formed by the non-metallic material, the problems can be prevented that the jig abrades away by rubbing between the raw materials for silicon production and the jig, and wear debris mixes in silicon.

Melting point or sublimation temperature of the non-metallic material parts 12a and 12b is preferably at least higher than the melting point (1,410°C) of silicon. Portions having a temperature higher than the melting point of silicon sometimes exist in the arc furnace. Therefore, the melting point (sublimation temperature) of the non-metallic material portions (12a and 12b) is preferably 1,500°C or higher, more preferably 1,600°C or higher, further preferably 2,000°C or higher, particularly preferably 2,500°C or higher, and most preferably 2,800°C or higher.

The non-metallic material is preferably a carbon fiber-reinforced carbon material (C/C), a silicon-impregnated carbon fiber-reinforced carbon material (C/C/Si) or a composite material of those materials.

The carbon fiber-reinforced carbon material (C/C) is formed by knitting carbon fibers, impregnating the stitches with carbon pitch, burning the same to form a sheet, piling the sheets to form a block. The block is cut into a given shape. Thus, the non-metallic material portions 12a and 12b in the jigs 100A and 100B are formed.

The silicon-impregnated carbon fiber-reinforced carbon material (C/C/Si) is formed in the same manner as above, except that the sheet formed by burning is further impregnated with silicon. Impregnation with silicon increases hardness of a material and makes it difficult to wear during use. Furthermore, silicon is useful for oxidation prevention.

The composite material of the carbon fiber-reinforced carbon material (C/C) and the silicon-impregnated carbon fiber-reinforced carbon material (C/C/Si) may be a material obtained by combining those materials when forming a carbon material, and may have a multilayer constitution such that a first layer is constituted of C/C and a second layer is constituted of C/C/Si.

The jigs 100A and 100B may have a constitution that the jig comprises a metal-made core rod having a surface covered with a non-metallic material. This constitution can supplement strength of the jigs 100A and 100B with the core rod, and additionally can reduce the amount of an expensive non-metallic material used.

[0042] Examples of the metal material include carbon steels, stainless steels and heat-resistant steels (such as cobalt alloy, nickel alloy and titanium alloy). In this case, a side inserted in the raw materials for silicon production is required that the core rod is covered with the non-metallic material, but other side held by human power or mechanical means may be that the core rod is exposed.

The jigs 100A and 100B having the above constitution can be formed by winding a sheet of a non-metallic material around a metal-made core rod before forming the above block. Furthermore, a hole is formed in a non-metallic material member having a given shape cut out of a block, and a metal-made core rod may be inserted in the hole.

### (Poking rod)

The jig used in the production method of the present invention is preferably the jig 100A used to crush a solid containing at least one of the raw materials for silicon production and the heated product. The jig is generally called a "poking rod".

When a jig equipped with the non-metallic material portion, at least a portion coming into contact with the raw materials for silicon production or heated product, having a temperature of 1,000°C or higher being constituted of the non-metallic material portion, is used as the poking rod, mixing of impurities can be prevented during poking word.

The poking rod is used to crush a shell in the case that in producing silicon by heating, carbon monoxide formed by a reaction accumulates at low temperature part, thereby strong shell is formed near the surface of raw materials for silicon production in a furnace. Poking work using the poking rod is described using Fig. 1.

In the arc furnace 500 of Fig. 1, the jig 100A equipped with the poking rod is inserted in the furnace through a plurality of open windows (not shown) in a furnace lid 516, and is moved up and down by human power or mechanical force to crush a shell formed near the surface of the raw materials for silicon production. The poking work may be conducted when drop of the surface of the raw materials for silicon production has been stagnant or may periodically be conducted.

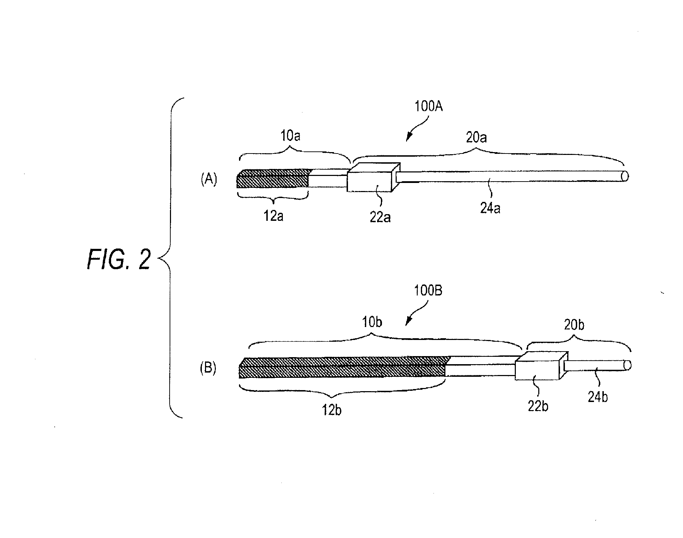

One embodiment of the jig 100A equipped with a poking rod is shown in Fig. 2(A). The jig 100A is constituted of a poking rod 10a at a left side of Fig. 2(A) and a handle jig 20a at a right side of Fig. 2(A) that are bound together. The handle jig 20a is constituted of a combination of a joint member 22a and a handle member 24a.

The jig 100A is operated such that the poking rod 10a side at the left side of Fig. 2(A) is inserted in the raw materials for silicon production, and the handle jig 20a side at the right side of Fig. 2(A) is held by mechanical means or human.

The poking rod 10a side is inserted in the raw materials for silicon production as shown in Fig. 1 and is used to crush strong shell near the surface. A given portion of the poking rod 10a is constituted by a non-metallic material portion 12a as described below.

The jig 100A shown in Fig. 2(A) is equipped with the handle jig 20a at the right side of the poking rod 10a in Fig. 2(A). However, the handle jig 20a is not essential, and the entire jig 100A may be formed by the poking rod 10a.

In this case, one edge side (non-metallic material portion 12a side) of the poking rod is inserted in the raw materials for silicon production, and other edge side is held by mechanical means or human. Material of the handle jig 20a is not particularly limited, but is preferably formed by a metal material form the standpoint of strength.

Examples of the metal material include carbon steels, stainless steels and heat-resistant steels (for example, cobalt alloy, nickel alloy and titanium alloy).

### (Tapping bar)

The jig used in the production method of the present invention is preferably the jig 100B used to open a flow passage for passing a silicon melt when extracting the silicon melt formed in the furnace from the furnace. The jig is generally called a "tapping bar".

When a jig equipped with the non-metallic material portion, at least a portion thereof coming into contact with the raw materials for silicon production or the heated product, having a temperature of 1,000C or higher being constituted of the non-metallic material portion, is used, impurities during the tapping task can be prevented from being mixed.

The tapping bar is used in a task (tapping task) of removing a silicon melt accumulated on a furnace bottom from a side wall of a furnace lower part in a melting state. The tapping task using the tapping bar is described using Fig. 1.

In the tapping task, the jig 100B equipped with a tapping bar is inserted in the tap hole 512 provided on a side wall of a furnace lower part in a horizontal direction toward the central part of the furnace, and breaks a stopper (a clay-like material comprising pitch as a main component) used to stop a melt.

The tapping bar then breaks through a solid formed by solidifying raw materials for silicon production or a heated product clogging a passage way to form a sprue runner, and a silicon melt 560 collected near the center of the furnace bottom is discharged outside the furnace, and is received by a graphite vessel 340 through, for example, a gutter 320.

In the embodiment shown in the drawing, the right side of the jig 100B equipped with the tapping bar is attached to a drill 120. Thus, the jig 100B equipped with the tapping bar may be inserted in the furnace while rotating with the drill 120.

One embodiment of the jig 100B equipped with the tapping bar is shown in Fig. 2(B). The jig 100B is constituted of a tapping bar 10b at a left side of Fig. 2(B) and a handle jig 20b at a right side of Fig. 2(B) that are bound together.

The handle jig 20b is constituted of a combination of a joint member 22b and a handle member 24b. The jig 100B equipped with the tapping bar is operated such that the tapping bar 10b side at the left side of Fig. 2(B) is inserted in the raw materials of silicon production, and the handle jig 20b side at the right side of Fig. 2(B) is held by mechanical means or human.

The tapping bar 10b side is inserted from the tap hole 512 of the furnace lower part toward the silicon melt 560 present at the central part of the furnace as shown in Fig. 1 to form a sprue runner, thereby the silicon melt is discharged outside the furnace. A given portion of the tapping bar 10b is constituted of the non-metallic material portion 12b as described hereinafter.

The jig 100B shown in Fig. 2(B) is equipped with the handle jig 20b at the right side of the tapping bar 10b However, the handle jig 20b is not essential, and the entire jig 100B may be formed by the tapping bar 10b. In this case, one edge side (non-metallic material portion 12b side) of the tapping bar 10b is inserted in the furnace, and other edge side is held by mechanical means or human.

Material of the handle jig 20b is not particularly limited, but is preferably formed by a metal material form the standpoint of strength. The metal material is the same as in the case of the handle jig 20a in the jig 100A equipped with the poking material.

As the mechanical means of holding the handle jig 20b side of the jig 100B or the mechanical means of holding the one edge of the tapping bar 10b in the case of forming the entire jig 100B by the tapping bar 10b, for example, the drill 120 shown in Fig. 1 is exemplified.

Producing silicon by heating is a concept including carbon reduction of a silica raw material, reduction of a silica raw material by silicon carbide, and silicon production by heating silicon raw materials. Examples of the heating method include arc heating, induction heating, resistance heating, plasma heating, and electron beam heating. Above all, the embodiment that the jigs 100A and 100B are employed in a method of using an arc furnace in which a temperature of an arc portion reaches from 2,000 to 3,000°C is preferred from the standpoint of exerting heat resistance performance of the jigs 100A and 100B.

It is preferred that all of the jigs used in the production method of the present invention is equipped with the non-metallic material portion and at least a portion coming into contact with the raw materials for silicon production or a heated product, having a temperature of 1,000°C or higher is constituted of the non-metallic material portion. Examples of the jig used in the production method of the present invention include a poking rod and a tapping bar, and additionally include a gutter flowing a silicon melt, a holding vessel of a silicon melt, and a lid in heating and holding raw materials for silicon production or a heated product.

Raw materials for producing silicon (raw materials for silicon production) mean a silica raw material, a carbon material and the like. The heated product means molten raw materials for silicon production, reaction intermediates, silicon melt produced, and the like. The silica raw material melts but the carbon material does not melt. Therefore, the molten raw materials for silicon production include the state that solid carbon material is dispersed in the molten silica raw material.

### [Raw materials for silicon production]

The raw materials 550 for silicon production for producing silicon can use raw materials containing at least one of (1) a silica raw material and a carbon material, (2) a silica raw material and silicon carbide, and (3) silicon raw materials. (1) and (2) may be mixed and used. Furthermore, the carbon material may be added to the system (3), and the resulting mixture may be used.

The raw materials for silicon production are preferably high purity materials having small content of impurities. Examples of the impurities generally contained in the silica raw material include iron, aluminum, calcium and titanium, although varying depending on kinds of the raw materials for silicon production.

The raw materials for silicon production used in the production method of the present invention preferably have low contents of iron, aluminum, calcium and titanium (hereinafter referred to as "major metal impurities"). When a jig equipped with the non-metallic material portion and in which a portion coming into contact with the raw materials for silicon production or the heated reaction product, having a temperature of 1,000°C or higher is constituted of the non-metallic material portion is used in the production of high purity silicon by carbon reduction using high purity raw materials for silicon production, its effect is particularly exerted, and high purity silicon can be produced.

The content of iron in the raw materials for silicon production is preferably 0.1% by mass (1,000 mass ppm) or less, more preferably 0.01% by mass or less, and further preferably 0.001 % by mass or less.

### (Silica raw material)

The silica raw material used in the production method of the present invention can use any material so long as the material comprises SiO₂ as a main component. Examples of the silica raw material include powdered materials such as quartz powder (quartz sand) and quartz bulk.

The silica raw material is preferably a high purity material having small content of impurities. Examples of the impurities generally contained in the silica raw materials include iron, aluminum, calcium and titanium, although varying depending on the kind of the silica raw material.

The silica material used in the production method of the present invention is preferably that the content of each impurity is low. When a jig equipped with the non-metallic material portion and in which a portion coming into contact with the raw materials for silicon production or the heated reaction product, having a temperature of 1,000°C or higher is constituted of the non-metallic material portion is used in the production of high purity silicon by carbon reduction using high purity raw materials for silicon production, its effect is particularly exerted, and high purity silicon can be produced.

The content of iron in the silica raw material is preferably 0.1% by mass (1,000 mass ppm) or less, more preferably 0.01% by mass or less, and further preferably 0.001 % by mass or less.

The total content of iron, aluminum, calcium and titanium is preferably 0.1% by mass or less, more preferably 0.01 % by mass or less, and further preferably 0.002% by mass or less.

Where the content of the major metal impurities in the silica raw material is large, purity of crude silicon obtained by reduction is low, load in impurity removal in a purification step is increased, and the yield of high purity silicon is deteriorated.

The method for producing silicon of the present invention is that when a jig equipped with the non-metallic material portion and in which a portion coming into contact with the raw materials for silicon production or a heated reaction product, having a temperature of 1,000°C or higher is constituted of the non-metallic material portion is used in a method for producing high purity silicon using such high purity raw materials for silicon production, mixing of impurities can be prevented, and purity of silicon can be maintained.

The content of major metal impurities in the silica raw material is preferred as the content is decreased. Although not particularly limited, the lower limit is generally about 0.0001 % by mass, and preferably 0.0002% by mass or more, from the standpoints of difficulty in availability and costs.

Contents of boron and phosphorus in the silica raw material are not particularly limited, but generally each content is preferably 10 mass ppm or less, more preferably 5 mass ppm or less, further preferably 1 mass ppm or less, particularly preferably 0.5 mass ppm, and most preferably 0.1 mass ppm or less.

Where the contents of boron and phosphorus in the silica raw material are high, purity of crude silicon obtained by reduction is decreased, load in removal of impurities in a purification step is increased, and yield of high purity silicon is deteriorated.

Use of silica raw material having low contents of boron and phosphorus consists with the gist of the present invention that contamination by a jig is prevented in a method for producing high purity silicon using high purity raw material. The smaller contents of boron and phosphorus are preferred, and the lower limit thereof is not particularly limited.

### (Carbon material)

The carbon material used in the production method of the present invention is preferred to use high purity carbon material. Ash content is preferably 1.0% by mass or less, more preferably 0.6% by mass or less, further preferably 0.1 % by mass or less, and most preferably 0.04% by mass or less.

The lower limit of the ash content is not particularly limited, and the smaller content is preferred. The ash content is generally 0.0001 % by mass (1 mass ppm) or more, and preferably 0.001% by mass or more, from the standpoints of difficulty in availability and costs. The ash content can be measured according to JIS M8812.

Lower content of each of the major metal impurities in the carbon material is preferred. The content of iron in the carbon material is preferably 0.1% by mass (1,000 mass ppm) or less, more preferably 0.01% by mass or less, and further preferably 0.001% by mass or less.

The total content of iron, aluminum, calcium and titanium is preferably 0.1 % by mass or less, more preferably 0.01 % by mass or less, and further preferably 0.002% by mass or less.

Where the content of the major metal impurities in the carbon material is large, purity of crude silicon obtained by reduction is decreased, load in removal of impurities in a purification step is increased, and yield of high purity silicon is deteriorated.

The smaller content of major metal impurities in the carbon material is preferred. Although not particularly limited, the lower limit is generally about 0.0001% by mass, and preferably 0.0002% by mass or more, from the standpoints of difficulty in availability and costs.

The contents of boron and phosphorus in the carbon material are not particularly limited. In general, the contents each are preferably 50 mass ppm or less, more preferably 10 mass ppm or more, further preferably 5 mass ppm or less, particularly preferably 1 mass ppm or less, and most preferably 0.5 mass ppm.

When the carbon material having the contents of major metal impurities, boron and phosphorus in such ranges is used, higher purity silicon can be produced. Furthermore, this consists with the gist of the present invention that contamination by a jig is prevented in a method for producing high purity silicon using high purity raw material.

Specific examples of the carbon material include cokes, natural graphite, artificial graphite, kish graphite, and carbon blacks such as acetylene black and Ketjen black.

### (Silicon carbide)

Silicon carbide having higher purity is preferably used, and the contents of major metal impurities, boron and phosphorus are the same as in the case of the silica raw material above.

### (Silicon raw material)

Examples of the silicon raw material include irregular silicon (silicon scrap) generated in a monocrystal silicon production process, and silicon debris generated by cutting, grinding or polishing monocrystal or polycrystal silicon.

The silicon raw material originally comprises high purity silicon as a main component, and the contents of major metal impurities, boron and phosphorus are the same as in the case of the silica raw material above.

The raw materials for silicon production described above are introduced in a furnace from an upper part thereof in a given ratio, and packed as the raw materials 550 in the furnace.

Ratio between the silica raw material and the carbon material in the case of performing a carbon reduction reaction in the arc furnace 500 for silicon production using the silica raw material and the carbon material as the raw materials 550 for silicon production is not particularly limited, and may be the same ratio as conventionally applied in the case of producing silicon by the carbon reduction reaction.

For example, charged ratio (mass ratio) of silica raw material/carbon material is preferably 0.3 or more, and more preferably 0.33 or more, and is preferably 0.5 or less, more preferably 0.4 or less, and further preferably 0.36 or less.

A part of the raw materials 550 comprising the silica raw material and the carbon material is converted to the silicon melt 560 by a carbon reduction reaction in the furnace, and collects at furnace bottom, and the silicon melt is taken out in a liquid state from the tap hole 512 provided on a lower part side surface of the arc furnace. When the silicon has been taken out, the raw materials 550 for silicon production are gradually decreased, and on the other hand, fresh raw materials are introduced from a furnace upper part.

### (Heated product)

The heated product means a product in a state that raw materials have been melted and mixed, a reaction intermediate or the silicon melt 560 produced.

### [Arc furnace for silicon production]

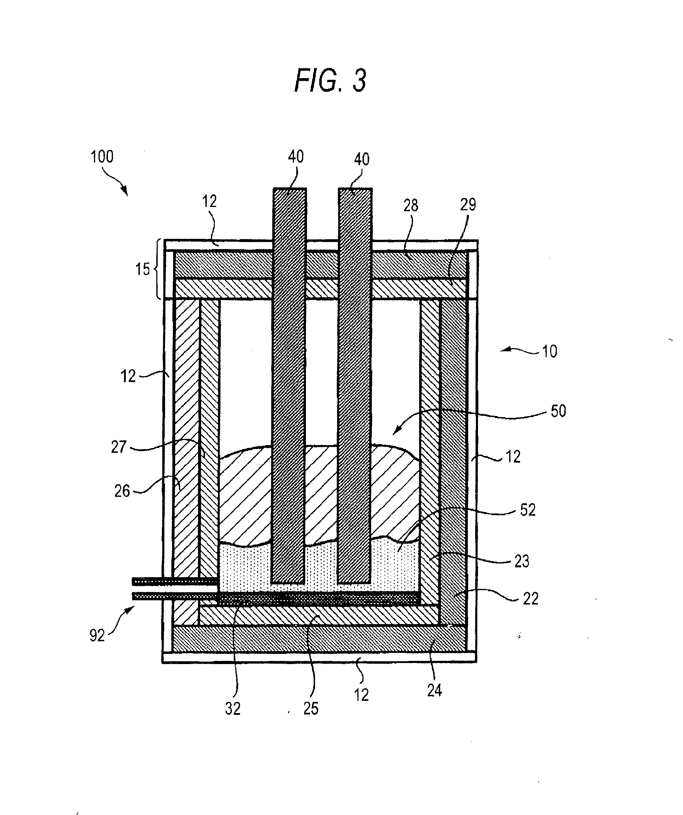

Structure of the arc furnace for silicon production of the present invention is described by reference to Fig. 3. Cross-sectional structure of the arc furnace is schematically shown in Fig. 3. An arc furnace 100 comprises a furnace body 10 for storing raw materials for silicon production and silicon produced, an electrode 40 for heating the raw materials for silicon production, a power source (not shown) for supplying electric power to the electrode, and a transformer (not shown) between the power source and the electrode.

The furnace body 10 comprises a case 12, and fire-resistant layers 22, 23, 24, 25, 26 and 27 lined on the case 12. The silicon melt produced collects on a bottom (furnace bottom) of the furnace body 10, but a tap hole 92 for taking out the silicon melt collected is formed in the furnace body 10.

The furnace body 10 may further comprise a furnace lid 15 in order to prevent release of the silicon produced or prevent release of heat from the furnace body 10. The furnace lid 15 comprises the case 12, and fire-resistant layers 28 and 29 lined on the case, similar to the furnace body 10.

The furnace lid 15 may further comprise a raw material introduction pipe (not shown) and a chimney (not shown), and may further comprise a through-hole for inserting an electrode in the furnace. In the present invention, in the case that the furnace body 10 has the furnace lid 15, the term "furnace body 10" means to include the furnace lid 15. Therefore, the term "inner walls of the furnace body 10" includes an inner wall of the furnace lid 15.

The raw materials 50 for silicon production introduced in the furnace 10 have a state of being basically accumulated from the furnace bottom of the furnace body 10 to the vicinity of the center in an up and down direction (shown in Fig. 3) of the furnace body 10. However, depending on production conditions, there is the case that the raw materials 50 for silicon production are introduced up to the vicinity of the furnace lid 15 or to such an extent that the raw materials overflow from the furnace body 10.

In the case that the raw materials have been introduced to such an extent that the raw materials overflow from the furnace body 10, a canopy-shaped furnace lid 15 is provided. In the arc furnace 100, a portion at which an arc is generated in the tip portion of the electrode 40 has the highest temperature, and has a temperature of from about 2,000 to 3,000°C. Therefore, the raw materials 52 for silicon production near the tip of the electrode 40 are present in a molten state. Furthermore, the silicon melt produced collects on the furnace bottom.

### (Fire-resistant layer)

The furnace body 10 is formed by lining the fire-resistant layers, 22, 23, 24, 25, 26, 27, 28 and 29 on the case 12. In general, a plurality of fire-resistant layers are laminated and adhered.

The term "inner walls of furnace body" in the present invention means the fire-resistant layers 23, 25, 27 and 29 at the innermost side of the fire-resistant layer, that is, at the side that the raw materials are stored. Thickness of the innermost fire-resistant layer is preferably 10 mm or more and 500 mm or less, and more preferably 30 mm or more and 300 mm or less.

Therefore, the "inner walls of furnace body" means a portion of preferably from 10 mm to 500 mm, and more preferably from 30 mm to 300 mm, in a furnace outside direction from an inner surface of the furnace body (surface at the side storing raw materials).

The fire-resistant layer is formed from a refractory which is a single substance of an oxide, a carbon material, silicon carbide or silicon nitride, or a mixture or a composite of a plurality of those. Examples of the oxide include refractories mainly comprising silica, alumina, magnesia, calcia or the like. Further examples include silica stone brick, pyrophyllite brick, clay (chamotte) brick, mullite brick, high alumina brick, zirconia brick and dolomite brick.

Further examples include a carbonaceous brick mainly comprising a carbon material, graphite, a carbon fiber-reinforced carbon composite, a silicon-impregnated carbon fiber-reinforced carbon material, a silicon carbide brick mainly comprising silicon carbide, silicon-impregnated silicon carbide brick, a silicon nitride brick mainly comprising silicon nitride, and a magnesia-carbonaceous brick comprising a mixture of an oxide and a carbon material.

A material having refractoriness adaptable to use temperature is selected as the refractory. Graphite, a high alumina brick, a magnesia-carbonaceous brick and calcia brick are preferred from the standpoint of high refractoriness.

The refractory preferably contains alumina matter in an amount of 50% by mass or more, and a high alumina brick containing 90% by mass or more of alumina is more preferred from standpoints of both costs and refractoriness.

A carbon lining 32 must be formed on a portion coming into contact with the silicon melt formed, that is, at a raw material storage side of the refractory layers 24 and 25 on the furnace bottom in Fig. 3. Thickness of the carbon lining 32 is preferably at least 30 mm ore more.

The carbon may be self-baking carbon (carbon before baking, and generally a mixture of a binder and cokes that are aggregates), and baking carbon. The baking carbon includes graphitized material and non-graphitized material. The carbon lining 32 on the furnace bottom plays a role of flowing electricity of arc discharge.

The lining may be formed on the inside of the side fire-resistant layers 23 and 27. The side lining is preferably formed from graphite, a carbon fiber-reinforced carbon composite, a silicon-impregnated carbon fiber-reinforced carbon material, a silicon carbide brick or a silicon-impregnated silicon carbide brick from the standpoint of preventing corrosion by molten silicon and prevention of contamination of silicon by impurities. Thickness of the side lining is preferably at least 30 mm or more.

Thermal conductivity of the refractory is preferably 0.5 W/mK or more, more preferably 1.0 W/mK or more, and further preferably 1.5 W/mK or more. In the comparison of refractories of the same material, a refractory having higher thermal conductivity has smaller porosity and is dense, and hot strength (bending strength, impact resistance, and erosion resistance to a melt) is increased.

As described in Background Art, high purity silicon easily applicable to solar cell and the like is demanded to produce. However, even though silicon is produced using raw materials having low phosphorus concentration, there was conventionally the problem that the phosphorus concentration of silicon produced is higher than that calculated from the amount of raw materials charged. This is considered to be due to that migration of phosphorus from the fire-resistant layer of the furnace body 10 to raw materials for silicon production or a silicon melt produced occurs. Therefore, the arc furnace 100 of the present invention employs a measure of preventing the migration of phosphorus.

The arc furnace used in the production method of the present invention is preferably that at least a part of inner wall of a member covering an upper part of the furnace body among the inner walls of the furnace body is constituted of a refractory having a phosphorus content of 0.01% by mass (100 wt ppm) or less (hereinafter referred to as a refractory having reduced phosphorus concentration). The upper part of the furnace body means a lid in an upper part in a vertical direction of raw materials for silicon production.

Phosphorus is released from the inner wall of the member covering the upper art of the furnace body, and the raw materials for silicon production or the silicon melt produced are contaminated with the phosphorus through a gas phase. Among the inner walls of the furnace body, even though a portion coming into contact with the raw materials for silicon production (both of solid raw materials and molten raw materials for silicon production) is constituted of a refractory having reduced phosphorus concentration, phosphorus sometimes contaminates the raw materials for silicon production or the silicon melt produced through a gas phase from the inner wall with which the raw materials for silicon production do not come into contact. Therefore, when at least a part of the inner wall covering the upper part of the furnace body among the inner walls of the furnace body is constituted of the refractory, the contamination can further be reduced.

Preferably at least 50% or more, more preferably at least 80% or more, and further preferably at least 100%, of the inner wall of the member covering the upper part of the furnace body is formed by the refractory having reduced phosphorus concentration.

The refractory having reduced phosphorus concentration means a refractory having a phosphorus concentration of 0.01% by mass or less, preferably 0.006% by mass or less, more preferably 0.004% by mass or less, further preferably 0.002% by mass or less, and most preferably 0.001% by mass.

The arc furnace used in the production method of the present invention is preferably that the inner wall of a portion coming into contact with the molten raw materials 52 for silicon production, or the silicon melt produced is constituted of the refractory having reduced phosphorus concentration. Thus, when the contamination of phosphorus through a gas phase is prevented and additionally, the inner wall actually coming into contact with the molten raw materials or the silicon melt is constituted of the refractory having reduced phosphorus concentration, migration of phosphorus due to the actual contact can be prevented and the phosphorus concentration in the silicon produced can further be reduced.

The arc furnace 100 used in the production method of the present invention is preferably that a portion with which the raw materials 50 for silicon production possibly come into contact among the inner walls of the furnace body10 is formed by the refractory having reduced phosphorus concentration.

As shown in Fig. 3, as compared with the inner wall portions with which the molten raw materials 52 for silicon production are being brought into contact, the raw materials 50 for silicon production containing solids are brought into contact with wider portion of the inner walls of the furnace body. When the wide portion is formed by the refractory having reduced phosphorus concentration, migration of phosphorus can further effectively be prevented.

The fact that inner wall of the member covering the upper part of the furnace body releases phosphorus and the phosphorus contaminates the raw materials 50 for silicon production or the silicon melt produced though a gas phase has been described above. The release of phosphorus remarkably occurs when the inner walls of the furnace, that is, the refractory constituting the inner wall, are heated to a given temperature or higher.

Therefore, because a refractory in which phosphorus concentration is not reduced used as the inner wall, that is, as a refractory layer 29 of the furnace lid 15 in the production example in which the silicon melt produced was contaminated with phosphorus, the temperature of the refractory was measured. As a result, it was found to be 1100°C.

In view of the above, it has been found that the refractory constituting the inner walls of the furnace body releases phosphorus when the temperature reaches at least 1,100°C or higher by heating. From this point, in the arc furnace 100 used in the production method of the present invention, the inner wall portion at which the temperature reaches 1100°C or higher by heating among the inner walls of the furnace body 10 is preferably formed by the refractory having reduced phosphorus concentration.

Furthermore, among the inner walls of the furnace body 10, the inner wall portion in which the temperature reaches 1100°C or higher by heating is preferably formed by the refractory having the phosphorus concentration of 0.0 1 % by mass or less.

The refractory constituting the inner walls of the furnace body releases phosphorus when reaching certain temperature or higher. When the temperature reaches at least 1100°C or higher, the refractory releases phosphorus. Therefore, a portion of the temperature or higher among the inner walls of the furnace body is preferably constituted of the refractory having reduced phosphorus content.

The entire inner walls of the furnace body 10 are preferably constituted of a refractory having reduced phosphorus concentration. When the entire inner walls of the furnace body are constituted of the refractory, a concentration of phosphorus mixing in silicon to be produced can be maintained extremely low even in the case of electric conduction for a long period of time.

The refractory preferably contains alumina in an amount of 50% by mass or more. Such a refractory is preferred from the standpoint of refractoriness. The refractory more preferably contains alumina in an amount of 90% by mass or more from the standpoints of both costs and refractoriness.

In the case that among the inner walls of the furnace body, at least a portion of the inner wall of the member covering the upper part of the furnace body is constituted of a refractory having phosphorus content of 0.01% by mass (100 wt ppm) or less, the contents of boron and phosphorus in the raw materials for silicon production each preferably are 0.001% by mass (10 ppm) or less.

Use of the raw materials having low contents of boron and phosphorus is preferred from the gist of the present invention that produces high purity silicon. When the production method of the present invention is applied using raw materials having reduced phosphorus content, contamination with phosphorus is prevented, thereby high purity silicon having reduced phosphorus content can be produced.

In the case that among the inner walls of the furnace body, at least a portion of the inner wall of the member covering the upper part of the furnace body is constituted of a refractory having phosphorus content of 0.01% by mass (100 wt ppm) or less, the phosphorus content in silicon produced by the production method of the present invention is preferably 10 ppm or less, more preferably 5 ppm or less, further preferably 0.5 ppm or less, and particularly preferably 0.1 ppm or less. When boron has been mixed, the boron is an element that is difficult to remove. Therefore, it is preferred to use raw materials for silicon production, having previously reduced boron content.

The phosphorus content in industrial silicon currently produced is from 25 to 30 ppm. Therefore, it is understood that the phosphorus content in the silicon produced by the method of the present invention is very low as compared with the phosphorus content in the industrial silicon.

Before describing the method for producing silicon according to the present invention, a chemical reaction caused in an arc furnace in the case of conducting a carbon reduction reaction using a silica raw material and a carbon material as raw materials for silicon production is described before.

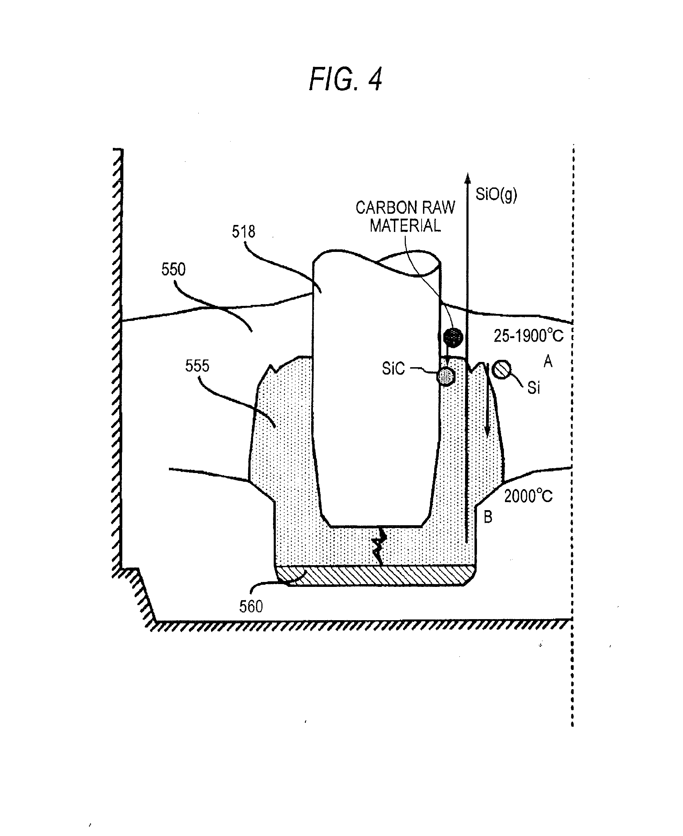

Fig. 4 is a view for explaining a carbon reduction reaction of silicon dioxide in an arc furnace, and is a view in which a tip portion of one electrode is noted. The details of the arc furnace, such as a lining and a fire-resistant layer, are omitted in Fig. 4.

As shown in Fig. 4, in the inside of the arc furnace, a tip of an electrode 518 is inserted in raw materials 550 for silicon production containing a silica raw material, a carbon material and the like. That is, in the method for producing silicon according to one embodiment of the present invention as shown, a so-called submerged arc system is formed.

] During operating the arc furnace 500, a layer 555 having SiO and CO mixed therein is present in the vicinity of the tip of the electrode 518 in the raw materials 550, and Si obtained as a result of the carbon reduction reaction forms a silicon melt 560 and collects on a lower part of the layer 555.

It is considered that in the arc furnace 500, an upper low temperature region is present in the vicinity shown by A in Fig. 4, a lower high temperature region is present in the vicinity shown by B in Fig. 4, and different reactions preferentially occur in the respective regions.

That is, it is considered that in the upper low temperature region A, a reaction represented by the following reaction formula (1) or (2) preferentially occurs.

SiO (g) + 2C → SiC + CO (g) ... (1)

2SiO (g) → Si + SiO₂ ... (2)

Of the above reactions, it is considered that particularly the reaction according to the reaction formula (1) occurs most preferentially, and SiC is largely formed in the upper low temperature region A.

On the other hand, it is considered that reactions represented by the following reaction formulae (3) to (5) preferentially occur in the lower high temperature region B.

SiO₂ + C → SiO (g) + CO (g) ... (3)

SiO (g) + SiC → 2Si + CO (g) ... (4)

Si0₂ + SiC → Si + SiO (g) + CO (g) ... (5)

Of the above reactions, it is considered that particularly the reaction according to the reaction formula (4) most preferentially occurs. For example, silicon is formed by the reaction between silicon carbide formed in the upper low temperature region A and gaseous silicon oxide.

Summarizing the above reaction formulae, in the carbon reduction reaction of the silica raw material, silicon is formed by the reaction according to the following reaction formula (6).

SiO₂ + 2C → Si + 2CO (g) ... (6)

Specific example of a production apparatus of silicon is described below, and a specific example of the method for producing silicon using the production apparatus is described below.

### <Production apparatus 700 of silicon>

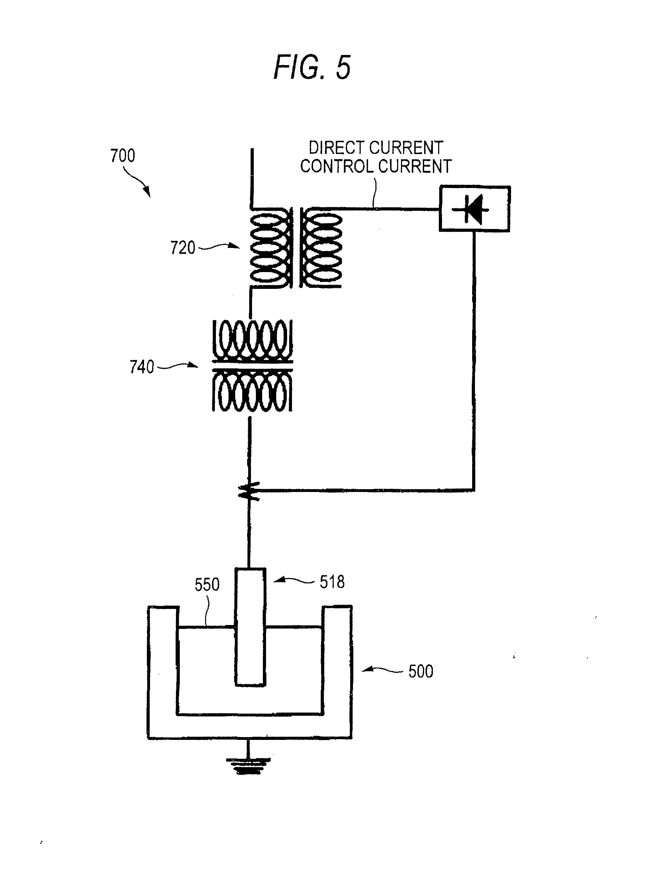

Fig. 5 is a schematic view for explaining the production apparatus 700 of silicon. As shown in Fig. 5, the production apparatus 700 of silicon comprises an arc furnace 500 equipped with an electrode 518 therein, a power regulator 720 for stabilizing electric current flowing through an electrode of the arc furnace 500, and a transformer 740 provided between the electrode 518 and the power regulator 720.

The silica material and the carbon material are packed in the arc furnace 500 as raw materials 550 for silicon production, and the tip of the electrode 518 is embedded therein. The electrode 518, the power regulator 720 and the transformer 740 are electrically connected. Other wiring and the like are omitted in Fig. 5.

### (Arc furnace 500)

The arc furnace 500 preferably has an inner diameter of 700 mm or more and 7,000 mm or less. At least one electrode 518 is provided in the arc furnace 500, and the tip of the electrode 518 is embedded in the raw materials 550. Thus, a so-called submerged arc system is formed.

### (Transformer 740)

Transformer 740 is provided in the production apparatus 700 according to the present invention. The transformer 740 is collected between the power regulator 720 and the arc furnace 500, and functions as a furnace transformer. The transformer 740 can use the conventional transformer without particular limitation, but a transformer having large allowable current is preferably used.

Specifically, a transformer having allowable current of from 1,100A (100 kW operating furnace) to 105,000A (20,000 kW operating furnace) is preferably used. Particularly, transformation is preferably conducted by the transformer 740 having the capacity 1.5 times or more of operating power of the arc furnace 500.

That is, when the operating power is P (kW), the capacity of the transformer is preferably 1.5P (kVA) or more, more preferably 2P (kVA) or more, and further preferably 3P (kVA) or more. By this, even in the case that a certain degree of large current has flown in the transformer 740, the transformer 740 does not stop, and continuous operation can be performed without stopping the entire production apparatus 700.

A connecting method of the transformer 740, the power regulator 720 and the electrode 518 is not particularly limited so long as it is appropriately transformable form in the production apparatus 700. For example, the same form as is used in an open arc furnace can be formed.

The production apparatus 700 according to the present invention further comprises a condenser, a balancer, a distribution board and a power-supply transformer, other than the above constitutions, and electric conduction to the arc furnace 500 is possible. Other forms are not particularly limited, and the same form as in the conventional form can be applied.

### <Specific example of production method of silicon>

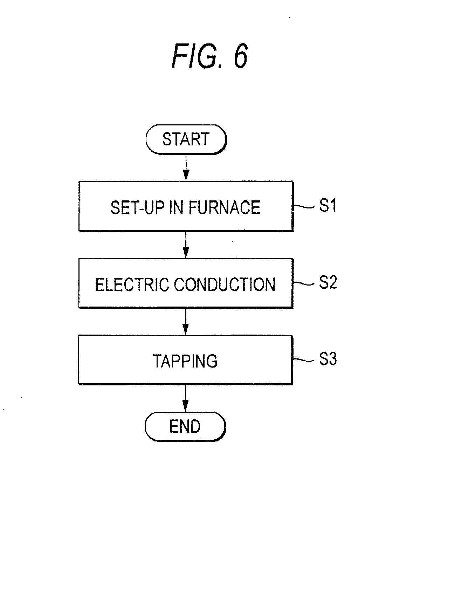

Specific example of the production method of silicon using the production apparatus 700 is described below. As each step of the specific example is shown in Fig. 6, the specific example of the production method of silicon has each step of set-up in furnace (step S1), electric conduction (step S2) and tapping (step S3), and conducts chipping work and the like in the furnace after stopping operation of the furnace.

### (Step S1)

Step S1 is a step of attaching the electrode 518 to the arc furnace 500, introducing raw materials in the furnace to fill with raw materials 550, and setting up the furnace to a state that silicon can be produced. The ratio between the silica raw material and the carbon material in the raw materials 550 is a ratio that silicon can appropriately be produced as described before. The electrode tip of the electrode 518 is embedded in the raw materials 550, and a so-called submerged arc system is formed.

### (Step S2)

Step S2 is a step of flowing electricity in the arc furnace 500 after completion of the set-up of the inside of the furnace and heating the inside of the furnace by arc discharge. Temperature in the furnace heated by arc discharge is not limited, and may be left to the arc discharge. In this case, the amount of current flowing in the arc furnace 500 is adjusted and stabilized by the power regulator 720 provided outside the arc furnace 500.

By this, the reaction inside the raw materials 550 proceeds, and even in the state that silicon carbide accumulated in the furnace and the electrode 518 are contacted with each other to possibly cause short circuit, violent current swing occurred in the electrode 518 and other apparatuses (hereinafter referred to as "current hunting") is suppressed, and the operation can continuously be conducted without stopping the production apparatus 700.

On the other hand, in the step S2, the arc furnace is operated while setting the hearth power density PD (W/cm²) of the arc furnace 500 at 90 W/cm² or more. By this, high purity silicon can efficiently be produced, and the furnace can continuously be operated while suppressing formation of silicon carbide in the furnace without stopping the production apparatus 700.

Furthermore, in the step S2, the silica material and the carbon material are consumed with increasing the temperature in the furnace, and raw materials are additionally introduced according to the amount corresponding to the lowered level of the raw materials. When the temperature in the furnace is further increased and a shell begins to be formed on the surface of the raw materials, the level of the raw materials is not spontaneously lowered even though the raw materials are consumed.

In such a case, after crushing the shell on the surface of the raw materials using the jig 100A equipped with the poking rod, the poking work of adding the raw materials must be conducted. The poking work may be conducted when the lowering of the level of raw materials does not spontaneously occur, and may be conducted at given intervals, preferably at intervals of 5 hours, more preferably at intervals of 3 hours, and further preferably at intervals of 1 hour.

By conducting the poking work using the jig 100A equipped a poking rod of the present invention, contamination of the raw materials for producing silicon is conducted, leading to the production of high purity silicon.

### (Step S3)

The silicon formed by carbon reduction in the arc furnace 500 gradually collects on the furnace bottom in a liquid state. The step S3 is a step of flowing out the liquid silicon (the silicon melt 560) from the tap hole 512 provided on the side surface of the furnace bottom and taking out the same (tapping task).

By taking the silicon out of the tap hole 512, the raw materials 550 in the furnace are gradually decreased. In the present invention, fresh silica material and carbon material are introduced in the furnace from the upper part thereof in accordance with the decreased amount of the raw materials 550, and the carbon reduction reaction is continuously conducted, as described above.

When the tapping task is conducted using the jig 100B equipped with a tapping bar of the present invention, contamination of the silicon melt 560 is prevented and high purity silicon can be obtained.

Thus, the silicon is extracted from the silica raw material by the carbon reduction reaction through the steps S1 to S3. In the case of stopping the production of silicon, chipping work is thereafter conducted in the furnace.

The method for producing silicon described above is a method for producing high purity silicon by the carbon reduction reaction using high purity raw materials for silicon production, and is a method that eliminates the problem such as short circuit by the use of high purity raw materials, and can continuously produce silicon.

In operating the raw materials for silicon production or the heated product in the heating furnace in the method described above, when the jigs 100A and 100B equipped with the non-metallic material portion and in which at least a portion coming into contact with the raw materials for silicon production or the heated reaction product, having a temperature of 1,000°C or higher is constituted of the non-metallic material portion is used, the raw materials and the silicon melt produced can be prevented from being contaminated, and high purity silicon can be produced.

When the arc furnace 100 in which, among the inner walls of the furnace body, at least a part of the inner wall of the member covering the upper part of the furnace body is constituted of a refractory having a phosphorus content of 0.01 % by mass (100 wt ppm) or less is used in the above method, the silicon produced is prevented from being contaminated with phosphorus, and higher purity silicon having reduced phosphorus concentration can be produced.

### Examples

### (Example 1-1)

In the production apparatus of silicon as shown in Fig. 1, the silica raw material and the carbon material as shown in Table 1 were introduced in the furnace [charging ratio (mass ratio): 0.33 (carbon material/silica raw material)], three electrodes (electrodes a to c) having a diameter of 100 mm were arranged, and arc discharge was conducted. The refractory used in the inner walls of the furnace body and the electrode were the same as used in Example 2-3 described hereinafter.

The silica raw material and the carbon material began to be consumed with increasing the temperature in the furnace, and the raw materials were additionally introduced in an amount corresponding to a portion that the level of raw materials was spontaneously lowered. However, when the temperature of the furnace was further increased and a shell begun to be formed on the surface of the raw materials, the level of the raw materials was not spontaneously lowered with consumption of the raw materials.

After that, the shell on the surface of the raw materials was crushed using a poking rod of a carbon fiber-reinforced carbon material (C/C) shown in the column of Example 1-1 in Table 3, the step adding the raw materials was repeated at a frequency of one time per hour, the operation was continued for about 20 hours from the initiation of the poking, and the tapping task was conducted.

The tapping was conducted such that a tapping bar of a carbon fiber-reinforced carbon material (C/C) shown in the column of Example 1-1 in Table 3 was attached to a tapping drill, and crashed through a stopper portion while rotating at 40 rpm, and a tip of the tapping bar was inserted in the furnace in which a silicon melt collected, and was pulled out.

The silicon melt was guided to a graphite vessel outside the furnace through a gutter, and 15 kg of silicon was obtained.

Concentration of impurities, bending strength and melting point of materials forming the poking rod and tapping bar used are shown in Table 2.

Furthermore, materials of the poking rod and the tapping bar, whether poking work and tapping task can be carried out, and analytical results of silicon obtained are shown in Table 3.

The temperature in the upper part of the raw materials in the furnace is from 1,000 to 1,500°C (measured value), and it is estimated from this that the temperature of the raw materials with which the poking rod comes into contact is from 1,200 to 1,700°C. Also, the silicon melt with which the tapping bar comes into contact has a temperature of from 1,500 to 1,700°C.

### (Example 1-2)

Production of silicon was carried out by operating the production apparatus of silicon under the same conditions as in Examples 1-1 and using C/C in the poking rod and a silicon-impregnated carbon fiber-reinforced carbon material (C/C/Si) (material shown in the column of Example 1-2 in Table 3) in the tapping bar. The refractory used in the inner walls of the furnace body and the electrode had used the same refractory and electrode as used in Example 2-2 described hereinafter. As a result, 15 kg of silicon was obtained.

### (Example 1-3)

Production of silicon was carried out by operating the production apparatus of silicon under the same conditions as in Examples 1-1 and using C/C/Si (material shown in the column of Example 1-3 in Table 3) in both the poking rod and the tapping bar, and 15 kg of silicon was obtained. The refractory used in the inner walls of the furnace body and the electrode had used the same refractory and electrode as used in Example 2-2 described hereinafter.

### (Example 1-4)

Production of silicon was carried out by operating the production apparatus of silicon under the same conditions as in Examples 1-1 and using C/C in the poking rod and an iron bar (SS400) (material shown in the column of Example 1-4 in Table 3) in the tapping bar. The refractory used in the inner walls of the furnace body and the electrode had used the same refractory and electrode as used in Example 2-2 described hereinafter.

### (Comparative Example 1-1)

Production of silicon was carried out by operating the production apparatus of silicon under the same conditions as in Examples 1-1 and using an iron bar (SS400) (material shown in the column of Comparative Example 1-1 in Table 3) in both the poking rod and the tapping bar. The refractory used in the inner walls of the furnace body and the electrode had used the same refractory and electrode as used in Example 2-2 described hereinafter.

As a result, 15 kg of silicon was obtained. However, the tips of the poking rod and the tapping bar eroded, and as a result, the silicon obtained contained large amounts of impurities such as Fe, Al and P as compared with the Examples.

### (Comparative Example 1-2)

Production of silicon was carried out by operating the production apparatus of silicon under the same conditions as in Examples 1-1 and using graphite (material shown in the column of Comparative Example 1-3 in Table 3) in both the poking rod and the tapping bar. However, the graphite poking rod frequently broken, and when the shell on the surface of the raw materials becomes hard, the shell could not be crushed. Furthermore, the graphite tapping bar broken when inserting in the furnace, the tapping task could not be conducted.

**(Table 1)**

| | B (µg/g) | P (µg/g) | Fe (µg/g) | Al (µg/g) | Ti (µg/g) | Ca (µg/g) | Mg (µg/g) | Ash (%) |
|---|---|---|---|---|---|---|---|---|
| Silica raw material | <0.1 | <0.1 | 1.0 | 9.0 | 1.2 | 0.6 | 0.1 | - |
| Carbon material | 0.4 | <0.1 | 4.0 | 4.0 | 0.8 | 4.0 | 0.8 | 0.0 |

**(Table 2)**

| Material | Analytical result (µg/g) | | | | | | | | | | | Bending strength (MPa) | Melting point (°C) |
|---|---|---|---|---|---|---|---|---|---|---|---|---|---|
| | B | P | Fe | Al | Ti | Mg | Mn | Cu | Cr | Ni | Mo | | |
| Carbon steel | <1 | 260 | - | 1,000 | - | - | 10,000 | 2,000 | 2,000 | 1,000 | 200 | 200 | 1,450 |
| C/C | 0.6 | 120 | 11 | 28 | 70 | 0.2 | - | - | - | - | - | 147 | 3,642 (Sublimation) |
| C/C/Si | 0.8 | 30 | 100 | 700 | 90 | 200 | - | - | - | - | - | 150 | 3,642 (Sublimation) |
| Graphite | 1.7 | 5.8 | 4.5 | 6.2 | 1.5 | 0.4 | - | - | - | - | - | 54 | 3,642 (Sublimation) |

**(Table 3)**

| | Material of poking rod | Material of tapping bar | Whether or not can be carried out | | Analytical result of silicon obtained (µg/g) | | | |
|---|---|---|---|---|---|---|---|---|
| | | | Poking | Tapping | B | P | Fe | Mg |
| Example 1-1 | C/C | C/C | ○ | ○ | 0.9 | 0.4 | 29.0 | 0.1 |
| Example 1-2 | C/C | C/C/Si | ○ | ○ | 1.7 | 0.6 | 15.0 | 0.1 |
| Example 1-3 | C/C/Si | C/C/Si | ○ | ○ | 1.6 | 0.6 | 43.0 | <0.1 |
| Example 1-4 | C/C | Carbon steel | ○ | ○ | 4.0 | 10.0 | 16,000.0 | 0.4 |
| Comparative Example 1-1 | Carbon steel | Carbon steel | ○ | ○ | 5.1 | 12.0 | 26,000.0 | 0.4 |
| Comparative Example 1-2 | Graphite | Graphite | × | × | - | - | - | - |

As shown in Table 3, Examples 1-1 to 1-4 showed that contents of B, P, Fe and Mg in the silicon obtained are low as compared with Comparative Example 1-1. It was seen from the result that according to the production method of the present invention using a jig equipped a non-metallic material portion having bending strength of 100 MPa or more and a melting higher than the melting point of silicon and in which at least a portion coming into contact with the raw materials for silicon production or the heated product, having a temperature of 1,000°C or higher is constituted by the non-metallic material portion, as a jig for operating at least one of the raw materials for silicon production or the heated product in the furnace, contamination of silicon produced can be suppressed.

### (Example 2-1)

In an arc furnace having the structure shown in Fig. 3, a refractory having four layers of a refractory layer 2 (refractory C), a refractory layer 3 (refractory D) and a refractory layer 4 (refractory F) was placed from the inside as a refractory layer of the side surface. Furthermore, a refractory layer having two layers of a refractory layer 5 (refractory C) and a refractory layer 6 (refractory E) was placed from the inside as a refractory layer of the furnace bottom. Furthermore, a refractory layer 7 (refractory A) was placed as a refractory layer of a furnace lid. Graphite lining was placed on the side surface and the innermost side of the furnace bottom. Production of silicon was carried out using the arc furnace. Graphite electrode (containing P in an amount of 0.4 mass ppm) was used as the electrode.

Graphite lining having a thickness of 120 mm was formed as the carbon lining on the furnace bottom. Rectangular graphite plates each having a thickness of 30 mm were placed side by side as the graphite lining on the side surface. Therefore, it is considered that the graphite linings on the side surface have gaps and the graphite lining on the side surface abrades away by oxidation during operation, leading to the possibility of formation of holes, and as a result, the effect of preventing contamination by phosphorus is not substantially obtained.

Silica raw material and carbon material were used as the raw materials for silicon production. Purities of those raw materials are shown in Table 4. Charging ratio (mass ratio) of the raw materials was 0.33 (carbon material/silica raw material).

**(Table 4)**

| | B (wt ppm) | P (wt ppm) | Fe (wt ppm) | Al (wt ppm) | Ti (wt ppm) | Ca (wt ppm) | Mg (wt ppm) | Ash (%) |
|---|---|---|---|---|---|---|---|---|
| Silica raw material | <0.1 | <0.1 | 1.0 | 9.0 | 1.2 | 0.6 | 0.1 | - |
| Carbon material | 0.4 | <0.1 | 4.0 | 4.0 | 0.8 | 4.0 | 0.8 | 0.01 |

Kind of refractory used, its phosphorus concentration, and presence or absence of lining of the side surface are shown in Table 5. Components, phosphorus concentration and thermal conductivity of each refractory used are shown in Table 6.

### (Example 2-2)

An arc furnace was constituted in the same manner as in Example 2-1, except that the graphite electrode (containing P in an amount of 0.4 mass ppm) was changed to a purified graphite electrode (content of P is less than 0.1 mass ppm), and the production of silicon was carried out.

### (Example 2-3)

An arc furnace was constituted in the same manner as in Example 2-1, except that the refractory layer 2 of the furnace wall was changed from the refractory C (containing P in an amount of 600 mass ppm) to the refractory A (containing P in an amount of 10 mass ppm), and the refractory layer 5 of the furnace bottom was changed from the refractory C (containing P in an amount of 600 mass ppm) to the refractory B (containing P in an amount of 50 mass ppm), and the production of silica was carried out.

### (Comparative Example 2-1)

An arc furnace was constituted in the same manner as in Example 2-1, except that the refractory layer 1 (refractory B) was placed inside the refractory layer 2 as a refractory layer of the side surface, and the refractory layer 7 of the furnace lid was changed from the refractory A (containing P in an amount of 10 mass ppm) to the refractory D (containing P in an amount of 530 mass ppm), and the production of silica was carried out.

**(Table 5)**

| | Wall | | | | Bottom | | Lid | |
|---|---|---|---|---|---|---|---|---|
| | Refractory layer 1 | | Refractory layer 2 | | Refractory layer 5 | | Refractory layer 7 | |
| | Refractory | P concentration (wt ppm) | Refractory | P concentration (wt ppm) | Refractory | P concentration (wt ppm) | Refractory | P concentration (wt ppm) |
| Example 2-1 | None | - | C | 600 | C | 600 | A | 10 |
| Example 2-2 | None | - | C | 600 | C | 600 | A | 10 |
| Example 2-3 | None | - | A | 10 | B | 50 | A | 10 |
| Comparative Example 2-1 | B | 50 | C | 600 | C | 600 | D | 530 |

**(Table 6)**

| | Main component | P concentration (wt ppm) | Thermal conductivity (W/mK) |
|---|---|---|---|
| Refractory A | Al₂O₃ 98 % | 10 | 1.81 |
| Refractory B | Al₂O₃ 94% | 50 | 2.2 |
| Refractory C | Al₂O₃ 93% | 600 | 1.17 |
| Refractory D | Al₂O₃ 90% | 530 | 0.52 |
| Refractory E | SiO₂-Al₂O₃ | 500 | 0.41 |
| Refractory F | CaO-SiO₂-Al₂O₃ | 10,000 | 0.17 |
| Lining | Graphite | 5.8 | 128 |
| Graphite electrode | Graphite | 0.4 | |
| Purified graphite electrode | Graphite | <0.1 | |

**(Table 7)**

| | Electric conduction time (H) | P concentration (wt ppm) | |
|---|---|---|---|
| Example 2-1 | 46 | 0.6 | ○ |
| | 70 | 17 | Δ |
| Example 2-2 | 45 | 0.4 | ○ |
| | 69 | 4.1 | Δ |
| Example 2-3 | 48 | 0.6 | ○ |
| | 167 | 0.7 | ○ |
| Comparative Example 2-1 | 51 | 80 | × |
| | 57 | 780 | × |

As shown in Table 7, it was seen that when, among the inner walls of the furnace body, a portion of the inner wall covering an upper part of the furnace body is constituted of a refractory having a phosphorus content of 0.01% by mass (100 wt ppm) or less, mixing phosphorus in silicon obtained can be prevented, and high purity silicon can be produced. As shown in Example 2-3, it was further seen that when the entire inner walls of the furnace body is constituted of the refractory, a concentration of phosphorus mixing in the silicon obtained can be maintained extremely low even in the case that electric conduction time for heating is a long period of time.

The present invention has been described above by reference to the embodiment that seems to be most practical and preferred at this time. However, the present invention is not limited to the embodiment disclosed in the present description, modifications can appropriately be made in a scope that is not contrary to the gist or concept of the invention readable from the claims and the entire description, and the jig and the method for producing silicon, accompanying the modifications should be understood to be included in the technical scope of the present invention.

Although the present invention has been described in detail and by reference to the specific embodiments, it is apparent to one skilled in the art that various modifications or changes can be made without departing the spirit and scope of the present invention. This application is based on Japanese Patent Application No. 2010-054697 filed March 11, 2010 and Japanese Patent Application No. 2010-054727 filed March 11, 2010, the disclosures of which are incorporated herein by reference in their entities.

### Industrial Applicability

When the jig of the present invention is used, high purity silicon can be produced, and the high purity silicon can be used as a silicon material of solar cells and the like.

### Description of Reference Numerals and Signs

- 100A: Jig equipped with poking rod
- 100B: Jig equipped with tapping bar
- 10a: Poking rod
- 10b: Tapping bar
- 12a, 12b: Non-metallic material portion
- 20a, 20b: Handle jig
- 100: Arc furnace for silicon production
- 10: Furnace body
- 12: Case
- 15: Furnace lid
- 22, 23, 24, 25, 26, 27, 28, 29: Refractory layer
- 32: Carbon lining
- 40: Electrode
- 50: Raw materials for silicon production
- 52: Molten raw materials for silicon production
- 92: Tap hole
- 200: Production apparatus of silicon
- 86: Transformer
- 88: Power regulator

## Claims

1. A method for producing silicon by at least heating any one of raw materials for silicon production selected from a silica raw material and a carbon material; a silica raw material and silicon carbide; and silicon raw material, in a heating furnace,
wherein the method comprises operating at least one of the raw materials for silicon production and a heated product in the heating furnace using a jig, and
the jig comprises a non-metallic material portion having a bending strength of 100 MPa or more and a melting point higher than a melting point of silicon, and at least a portion thereof coming into contact with the raw materials for silicon production or the heated product, having a temperature of 1,000°C or higher, is constituted of the non-metallic material portion.

2. The method for producing silicon as claimed in claim 1, wherein a portion coming into contact with the raw materials for silicon production or the heated product is constituted of the non-metallic material portion.

3. The method for producing silicon as claimed in claims 1 or 2, wherein the non-metallic material is a carbon fiber-reinforced carbon material, a silicon-impregnated carbon fiber-reinforced carbon material or a composite material of those materials.

4. The method for producing silicon as claimed in any one of claims 1 to 3, wherein the jig has a metal-made core rod, and a surface of the metal-made core rod is covered with the non-metallic material.

5. The method for producing silicon as claimed in any one of claims 1 to 4, wherein a content of iron in the raw materials for silicon production is 0.1% mass or less.

6. The method for producing silicon as claimed in any one of claims 1 to 5, wherein a content of iron in the silica raw material is 0.1 % by mass or less.

7. The method for producing silicon as claimed in any one of claims 1 to 6, wherein the jig is a jig used to crush a solid containing at least one of the raw materials for silicon production and the heated product.

8. The method for producing silicon as claimed in any one of claims 1 to 6, wherein the jig is a jig used to open a flow passage allowing passage of a silicon melt formed by heating when extracting the silicon melt from the heating furnace.

9. The method for producing silicon as claimed in any one of claims 1 to 6, wherein the jig is a jig used to crush a solid containing at least one of the raw materials for silicon production and the heated product, and a jig used to open a flow passage allowing passage of a silicon melt formed by heating when extracting the silicon melt from the heating furnace.

10. A jig comprising a non-metallic material portion having a bending strength of 100 MPa or more and a melting point higher than a melting point of silicon.

11. The jig as claimed in claim 10, which is a jig to operate at least one of raw materials for silicon production and a heated product when producing silicon by at least heating any one selected from a silica raw material and a carbon material; a silica raw material and silicon carbide; and a silicon raw material, as the raw materials for silicon production, wherein at least a portion thereof coming into contact with the raw materials for silicon production or the heated product, having a temperature of 1,000°C or higher is constituted of the non-metallic material portion.

12. The jig as claimed in claim 10 or 11, wherein a portion coming into contact with the raw materials for silicon production or the heated product is constituted of the non-metallic material portion.

13. The jig as claimed in any one of claims 10 to 12, wherein the non-metallic material is a carbon fiber-reinforced carbon material, a silicon-impregnated carbon fiber-reinforced carbon material or a composite material of those materials.

14. The jig as claimed in any one of claims 10 to 13, which has a metal-made core rod, and a surface of the metal-made core rod is covered with the non-metallic material.

15. The jig as claimed in any one of claims 10 to 14, wherein a content of iron in the raw materials for silicon production is 0.1% mass or less.

16. The jig as claimed in any one of claims 10 to 15, wherein a content of iron in the silica raw material is 0.1% by mass or less.

17. The jig as claimed in any one of claims 10 to 16, which is a jig used to crush a solid containing at least one of the raw materials for silicon production and the heated product.

18. The jig as claimed in any one of claims 10 to 17, which is a jig used to open a flow passage allowing passage of a silicon melt formed in the heating furnace when extracting the silicon melt from the heating furnace.

19. The jig as claimed in any one of claims 10 to 18, which is a jig used to crush a solid containing at least one of the raw materials for silicon production and the heated product, and a jig used to open a flow passage allowing passage of a silicon melt formed by heating when extracting the silicon melt from the heating furnace.

20. The method for producing silicon as claimed in any one of claims 1 to 9,
wherein the heating furnace is an arc furnace comprising a furnace body for storing the raw materials for silicon production, and
among inner walls of the furnace body, at least a part of an inner wall of a member covering an upper part of the furnace body is constituted of a refractory having a phosphorus content of 0.01% by mass (100 wt ppm) or less.

21. The method for producing silicon as claimed in claim 20,
wherein among inner walls of the furnace body, an inner wall portion capable of coming into contact with molten raw materials for silicon production or a silicon melt produced is constituted of the refractory.

22. The method for producing silicon as claimed in claim 20 or 21,
wherein among inner walls of the furnace body, an inner wall portion at which temperature is 1100°C or higher by heating is constituted of the refractory.

23. The method for producing silicon as claimed in any one of claims 20 to 22, wherein the entire inner walls of the furnace body are constituted of the refractory.

24. The method for producing silicon as claimed in any one of claims 20 to 23, wherein thermal conductivity of the refractory is 0.5 W/mK or more.

25. The method for producing silicon as claimed in any one of claims 20 to 24, wherein the refractory contains alumina in an amount of 50% by mass or more.

26. The method for producing silicon as claimed in any one of claims 20 to 25, wherein boron and phosphorus contents in the raw materials for silicon production each are 0.001 % by mass or less.
